**Europäisches Patentamt**

**European Patent Office**

**Office européen des brevets**

(19)

(11) Veröffentlichungsnummer: **0 109 977**
**B1**

(12) **EUROPÄISCHE PATENTSCHRIFT**

(45) Veröffentlichungstag der Patentschrift:
**29.10.86**

(51) Int. Cl.⁴: **G 01 L 1/26**

(21) Anmeldenummer: **82111215.8**

(22) Anmeldetag: **03.12.82**

(54) **Krafteinleitungsglied für eine Kraftmesszelle.**

(43) Veröffentlichungstag der Anmeldung:
**13.06.84 Patentblatt 84/24**

(45) Bekanntmachung des Hinweises auf die Patenterteilung:
**29.10.86 Patentblatt 86/44**

(84) Benannte Vertragsstaaten:
**CH DE IT LI NL**

(56) Entgegenhaltungen:
**DE - A - 1 773 190**
**DE - A - 2 819 603**
**DE - B - 2 121 357**
**DE - U - 8 116 458**
**US - A - 4 248 317**

(73) Patentinhaber: **CARL SCHENCK AG,**
**Landwehrstrasse 55 Postfach 40 18, D-6100 Darmstadt**
**(DE)**

(72) Erfinder: **Giesecke, Peter, Dr., Talstrasse 2a,**
**D-6104 Seeheim/Stettbach (DE)**
Erfinder: **Theiss, Dieter, Dipl.-Ing., Habichtsweg 21,**
**D-6101 Rossdorf (DE)**

(74) Vertreter: **Brand, Fritz, Dipl.-Ing., Carl Schenck AG**
**Patentabteilung Landwehrstrasse 55 Postfach 4018,**
**D-6100 Darmstadt (DE)**

ACTORUM AG

## Beschreibung

Die Erfindung betrifft ein Krafteinleitungsglied für eine Kraftmesszelle gemäss dem Oberbegriff des Patentanspruchs 1 (siehe DE-B 2 121 357).

Kraftmesszellen sind zur Messung von im wesentlichen axial zur Kraftmesszelle gerichteten Kräften bestimmt. Sie werden beispielsweise als Wägezellen eingesetzt.

Beim praktischen Einsatz von Kraftmesszellen treten in vielen Fällen Querbewegungen und/ oder Querkräfte auf, beispielsweise bei einer Längenänderung einer auf Kraftmesszellen abgestützten Wägebrücke. Durch die Abweichung der aus der Last und der Querkraft resultierenden Krafteinleitungsrichtung von der axialen Richtung treten Messfehler auf, deren Grösse durch die Querkraftempfindlichkeit der Kraftmesszelle bestimmt wird. Auch die aussermittige Verlagerung des Krafteinleitungspunktes bedingt einen Messfehler der Kraftmesszelle.

In vielen praktischen Anwendungsfällen treten diese beiden Messfehler gemeinsam auf, insbesondere wenn wegen der zu erwartenden Querverschiebungen als Krafteinleitungsglied der Kraftmesszelle ein Wälzkörper verwendet wird. Bei einer solchen bekannten Kraftmesszelle (DE-C 1 806 668) wurden der Krümmungsradius und die Höhe des als Krafteinleitungsglied verwendeten Wälzkörpers so aufeinander abgestimmt, dass sich der Einfluss der Querkraftempfindlichkeit und der Einfluss der aussermittigen Krafteinleitung bei Querkrafteinfluss gegenseitig kompensieren. Weiterhin bedingen die Wälzkörper verhältnismässig grosse Bauhöhen; sie sind als gehärtete Präzisionsteile teuer und geben dynamische Stösse ungedämpft an die Kraftmesszelle weiter. Bei gewünschter flacher Bauweise kann man zwar eine Selbstzentrierung erreichen, nicht jedoch die Kompensationswirkung.

Bei einer bekannten Kraftmesszelle (DE-U 8 121 719) enthält das Krafteinleitungsglied einen elastischen Kraftübertragungskörper, durch den die zu übertragende Druckkraft auf den Krafteinleitungsknopf der Kraftmesszelle übertragen wird. Wegen der elastischen Verformbarkeit des Kraftübertragungskörpers, der sich über dem Krafteinleitungsknopf der Kraftmesszelle befindet, können auftretende Querbewegungen aufgenommen werden. Die hierbei auftretenden Querkräfte üben jedoch auf das Krafteinleitungsglied ein Moment aus, das im wesentlichen von der Grösse der Querkraft und der Höhe des elastischen Kraftübertragungskörpers abhängt. Dieses Moment führt zu einem Messfehler der Kraftmesszelle.

Es ist weiterhin eine Lastmessvorrichtung bekannt (DE-B 2 121 357), bei der die zu messende Kraft über Zugglieder auf den Krafteinleitungsknopf einer Wägezelle übertragen wird. In den Krafteinleitungsweg sind elastische Körper eingefügt, die in Verbindung mit Anschlägen als Überlastsicherung dienen. Infolge der Krafteinleitung über pendelnde Zugglieder werden bei dieser Vorrichtung zwar durch Querkräfte hervorgerufene Querverschiebungen abgefangen; Messfehler, zufolge der durch die Querkräfte hervorgerufenen Momente können jedoch nicht vermieden werden.

Aufgabe der Erfindung ist es, ein Krafteinleitungsglied für eine Kraftmesszelle gemäss dem Oberbegriff des Patentanspruches 1 so auszugestalten, dass unter Beibehaltung der Vorteile der elastischen Verformbarkeit des Krafteinleitungsglieds ein Messfehler infolge eines im Krafteinleitungsglied auftretenden Moments weitgehend vermieden wird.

Diese Aufgabe wird bei einem Krafteinleitungsglied gemäss dem Oberbegriff des Patentanspruches 1 erfindungsgemäss durch die im kennzeichnenden Teil dieses Patentanspruches angegebenen Merkmale gelöst.

Die wirksame Höhe des elastischen Kraftübertragungskörpers über dem Krafteinleitungsknopf, die als Faktor das auftretende Moment wesentlich beeinflusst, kann somit unabhängig von der tatsächlichen, konstruktiv bedingten Höhe des elastischen Kraftübertragungskörpers frei gewählt werden, so dass das im Kraftübertragungskörper auftretende Moment unmittelbar und im gewünschten Masse beeinflusst werden kann.

Auf diese Weise ist es möglich, das auftretende Moment vernachlässigbar klein werden zu lassen, indem man den ringförmigen Kraftübertragungskörper angenähert in Höhe des Krafteinleitungsknopfes der Kraftmesszelle anordnet, bzw. so ausbildet, dass die resultierende Horizontalkraft angenähert in Höhe des Krafteinleitungsknopfes wirkt. Hierzu wird zweckmässigerweise eine sich auf den Krafteinleitungsknopf abstützende Platte vorgesehen, die an ihrem Umfang einen abgesetzten Rand aufweist, der den ringförmigen elastischen Kraftübertragungskörper trägt.

Gemäss einer anderen Ausgestaltung ist vorgesehen, dass mindestens eine der beiden Berührungsflächen des Krafteinleitungsknopfes und der sich darauf abstützenden Platte ballig gekrümmt ist und dass der Krümmungsradius der Berührungsflächen und die axiale Lage, die Abmessungen und die physikalischen Eigenschaften des elastischen Kraftübertragungskörpers so aufeinander abgestimmt sind, dass sich der Einfluss der Querkraftempfindlichkeit und der Einfluss der aussermittigen Krafteinleitung bei Querkrafteinfluss gegenseitig kompensieren.

Die Erfindung wird nachfolgend an Ausführungsbeispielen näher erläutert, die in der Zeichnung dargestellt sind. Es zeigt:

Fig. 1 in vereinfachter Darstellungsweise im Schnitt eine Kraftmesszelle,

Fig. 2 eine Draufsicht auf einen ringförmigen Kraftübertragungskörper und

Fig. 3 einen Schnitt längs der Linie III-III in Fig. 2.

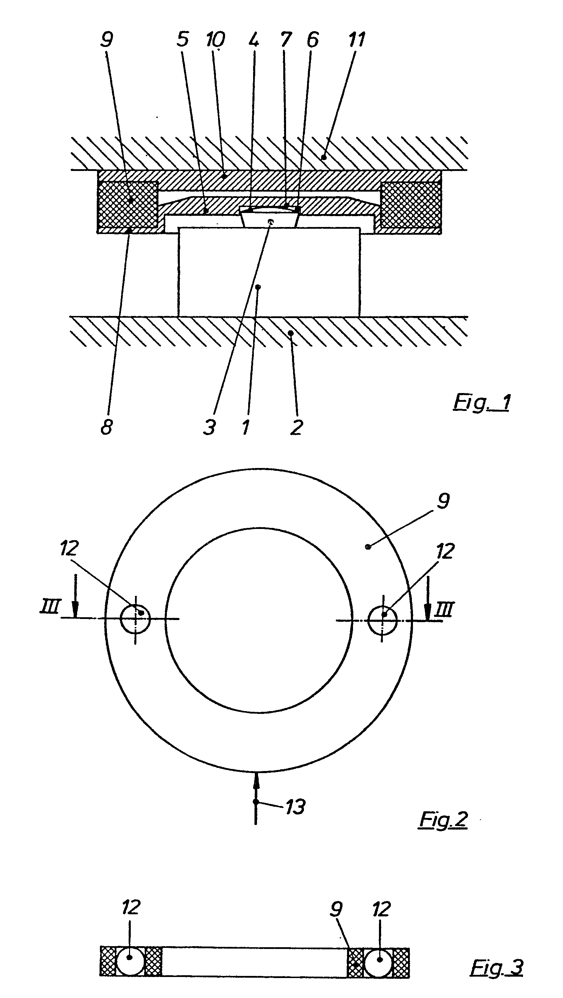

Fig. 1 zeigt eine Kraftmesszelle 1, die auf einem Fundament 2 befestigt ist. An ihrer Oberseite trägt die Kraftmesszelle 1 einen Krafteinleitungsknopf 3 mit ballig gekrümmter Oberfläche 4. Eine über der Kraftmesszelle 1 angeordnete Platte 5 weist an ihrer Unterseite eine zentrische Vertiefung 6 auf, deren ebener Boden 7 sich auf der ballig gekrümmten Fläche 4 des Krafteinleitungsknopfes 3 abstützt. Die Platte 5 weist an ihrem Umfang einen nach unten abgesetzten Rand 8 auf, der einen ringförmigen elastischen Kraftübertragungskörper 9 trägt, der beispielsweise aus einem Elastomer besteht.

Eine obere Platte 10 stützt sich mit ihrem Rand auf dem ringförmigen elastischen Kraftübertragungskörper 9 ab und trägt eine Wägebrücke 11 oder ein anderes Bauteil, aus dem die zu messende Kraft auf die Kraftmesszelle 1 übertragen wird.

Wie man beim dargestellten Ausführungsbeispiel erkennt, ist der konzentrisch zum Krafteinleitungsknopf 3 angeordnete ringförmige Kraftübertragungskörper 9 angenähert in Höhe der balligen Fläche 4 des Krafteinleitungsknopfes 3 der Kraftmesszelle 1 angeordnet. Wenn infolge einer seitlichen Verschiebung der Platte 10 eine einseitige Verformung des Kraftübertragungskörpers 9 erfolgt, wird dadurch kein Moment im Kraftübertragungskörper 9 erzeugt, das sich störend auf die Messung auswirken könnte.

Wenn jedoch durch die aussermittige Krafteinleitung bei einer Schrägstellung der Platte 5 und/oder durch eine Querkraftkomponente Fehlereinflüsse entstehen, so können diese durch eine geänderte Gestaltung des ringförmigen Kraftübertragungskörpers 9 kompensiert werden, insbesondere durch die Wahl der axialen Lage bei Schrägstellung des Kraftübertragungskörpers 9 und seiner physikalischen Eigenschaften.

Wenn die Einleitung der Querkraft in die Kraftmesszelle mit an die Querkraftempfindlichkeit angepasstem Moment erfolgt, ist die Ausführung als selbstkompensierendes System möglich.

Da sich der elastische Kraftübertragungskörper 9 nicht über dem Krafteinleitungsknopf 3 befindet, sondern diesen konzentrisch umgibt, erhält man eine vorteilhafte geringe Bauhöhe.

Für die Fälle, bei denen die Nachgiebigkeit des elastischen Kraftübertragungskörpers 9 in Lastrichtung störend ist, z.B. bei Rohranschlüssen an einen Wägebehälter, können Abrollkörper 12 (Fig. 2 und 3), z.B. Kugeln, in den Kraftübertragungskörper 9 eingebettet werden.

Die selbstkompensierende Wirkung kann weitgehend beibehalten werden, wenn vorwiegend nur in einer Richtung eine Querverschiebung erfolgt, indem zwei gegenüberliegende Kugeln 12 verwendet werden, die quer zur Verschieberichtung (Pfeil 13 in Fig. 2) angeordnet sind.

Beim Einsatz von mehr als zwei Kugeln 12 geht die selbstkompensierende Wirkung verloren, Selbstzentrierung und flache Bauweise bleiben aber erhalten.

**Patentansprüche**

1. Krafteinleitungsglied für eine Kraftmesszelle (1) mit einem Krafteinleitungsknopf (3), auf den sich das Krafteinleitungsglied abstützt, wobei das Krafteinleitungsglied einen konzentrisch zum Krafteinleitungsknopf (3) angeordneten elastischen Kraftübertragungskörper (9) aufweist, dadurch gekennzeichnet, dass der Kraftübertragungskörper (9) ringförmig ausgebildet und angenähert in der Höhe des Krafteinleitungsknopfes (3) angeordnet ist.

2. Krafteinleitungsglied nach Anspruch 1, dadurch gekennzeichnet, dass eine sich auf den Krafteinleitungsknopf (3) abstützende Platte (5) an ihrem Umfang einen abgesetzten Rand (8) aufweist, der den ringförmigen elastischen Kraftübertragungskörper (9) trägt.

3. Krafteinleitungsglied nach Anspruch 2, dadurch gekennzeichnet, dass mindestens eine der beiden Berührungsflächen (4, 7) des Krafteinleitungsknopfes (3) und der sich darauf abstützenden Platte (5) ballig gekrümmt ist und dass der Krümmungsradius der Berührungsflächen (4 bzw. 7) und die axiale Lage, die Abmessungen und die physikalischen Eigenschaften des elastischen Kraftübertragungskörpers (9) so aufeinander abgestimmt sind, dass sich der Einfluss der Querkraftempfindlichkeit und der Einfluss der aussermittigen Krafteinleitung bei Querkrafteinfluss gegenseitig kompensieren.

4. Krafteinleitungsglied nach Anspruch 2 oder 3, dadurch gekennzeichnet, dass in den elastischen Kraftübertragungskörper (9) zwei einander gegenüberliegende Abrollkörper (12) eingebettet sind, deren kugelige Endflächen eine obere Platte (10) und den Rand (8) der unteren Platte (5) berühren.

5. Krafteinleitungsglied nach Anspruch 2, dadurch gekennzeichnet, dass in den elastischen Kraftübertragungskörper (9) mehr als zwei Abrollkörper (12) eingebettet sind, deren kugelige Endflächen eine obere Platte (10) und den Rand (8) der unteren Platte (5) berühren.

6. Krafteinleitungsglied nach Anspruch 4 oder 5, dadurch gekennzeichnet, dass die Abrollkörper (12) Kugeln sind.

**Claims**

1. Force transfer member for a load cell (1) with a force transfer button (3), on which the force transfer member rests, the force transfer member having an elastic force-transmitting element (9) arranged concentrically to the force transfer button (3), characterized in that the force transmitting element (9) is of annular construction and is arranged approximately at the level of the force transfer button (3).

2. Force transfer member according to Claim 1, characterized in that a plate (5), resting on the force transfer button (3) has on its circumference a rebated rim (8), which carries the annular elastic force transmitting element (9).

3. Force transfer member according to Claim 2, characterized in that at least one of the two contact surfaces (4, 7) of the force transfer button (3) and of the plate (5) resting thereon is spherically curved and that the radius of curvature of the contact surfaces (4 or respectively 7) and the axial position, the dimensions and the physical properties of the elastic force transmitting element (9) are coordinated with each other such that the influence of transverse force sensitivity and the influence of offcentre force transfer with transverse force influence compensate each other reciprocally.

4. Force transfer member according to Claim 2 or 3, characterized in that two rolling elements (12) lying opposite each other are embedded in the elastic force transmitting element (9), the spherical end surfaces of which rolling elements touch an upper plate (10) and the rim (8) of the lower plate (5).

5. Force transfer member according to Claim 2, characterized in that more than two rolling elements (12) are embedded in the elastic force transmitting element (9), the spherical end surfaces of which rolling elements touch an upper plate (10) and the rim (8) of the lower plate (5).

6. Force introduction member according to Claim 4 or 5, characterized in that the rolling elements (12) are balls.

## Revendications

1. Elément servant au transfert d'une force à un capteur de force (1) comprenant un bouton de transfert de force (3) sur lequel s'appuie l'élément de transfert de force, l'élément de transfert de force comportant un élément de transmission de force (9) élastique et disposé concentriquement au bouton de transfert de force (3), caractérisé en ce que l'élément de transmission de force (9) est de forme annulaire et disposé approximativement à la hauteur du bouton de transfert de force (3).

2. Elément servant au transfert d'une force selon la revendication 1, caractérisé en ce qu'une plaque (5) qui s'appuie sur le bouton de transfert de force comprend sur sa périphérie un bord abaissé (8) qui supporte l'élément de transmission de force élastique et de forme annulaire (9).

3. Elément servant au transfert d'une force selon la revendication 2, caractérisé en ce qu'au moins l'une des deux surfaces de contact (4, 7) du bouton de transfert de force (3) et de la plaque (5) qui s'appuie sur lui est courbée selon une forme bombée et en ce que le rayon de courbure des surfaces de contact (4 ou 7) et la position axiale, les dimensions, les propriétés physiques de l'élément de transmission de force élastique (9) sont adaptés les uns aux autres de manière que l'influence de la sensibilité à la force transversale et l'influence du transfert de force hors centre se compensent mutuellement en cas d'influence d'une force transversale.

4. Elément servant au transfert d'une force selon la revendication 2 ou 3, caractérisé en ce que deux corps de roulement (12) opposés l'un à l'autre sont noyés dans l'élément de transmission de force élastique (9), dont les surfaces d'extrémité sphériques sont en contact avec une plaque supérieure (10) et avec le bord (8) de la plaque inférieure (5).

5. Elément servant au transfert d'une force selon la revendication 2, caractérisé en ce que plus de deux corps de roulement (12) sont montés dans l'élément de transmission de force élastique (9), dont les surfaces d'extrémité de forme sphérique sont en contact avec une plaque supérieure (10) et avec le bord (8) de la plaque inférieure (5).

6. Elément servant au transfert d'une force selon la revendication 4 ou 5, caractérisé en ce que les corps de roulement (12) sont des billes.

Fig. 1

Fig. 2

Fig. 3